Europäisches Patentamt

**European Patent Office**

**Office européen des brevets**

(11) Veröffentlichungsnummer: **0 115 267**

**B1**

(12) **EUROPÄISCHE PATENTSCHRIFT**

(45) Veröffentlichungstag der Patentschrift:
29.06.88

(21) Anmeldenummer: **84100052.4**

(22) Anmeldetag: **04.01.84**

(51) Int. Cl.⁴: **H 04 N 1/10, H 04 N 1/028**

(54) Abbildungssystem.

(30) Priorität: **28.01.83 DE 3302800**

(43) Veröffentlichungstag der Anmeldung:
**06.06.84 Patentblatt 84/32**

(45) Bekanntmachung des Hinweises auf die Patenterteilung:
**29.06.88 Patentblatt 88/26**

(84) Benannte Vertragsstaaten:
**AT BE CH DE FR GB IT LI NL SE**

(56) Entgegenhaltungen:
EP-A-0 021 093
DE-A-1 908 834
US-A-3 867 569

PATENT ABSTRACTS OF JAPAN, Band 5, Nr. 198,
16. Dezember 1981, Seite (E-87) (870)

(73) Patentinhaber: **Firma Carl Zeiss, D-7920 Heidenheim (Brenz) (DE)**

(84) Benannte Vertragsstaaten:
**BE CH DE FR IT LI NL SE AT**

(73) Patentinhaber: **CARL-ZEISS-STIFTUNG trading as CARL ZEISS, D-7920 Heidenheim (Brenz) (DE)**

(84) Benannte Vertragsstaaten: **GB**

(72) Erfinder: **Fey, Hans-Jürgen, Dipl.-Phys., Bismarck-Strasse 91/3, D-7080 Aalen (DE)**

## Beschreibung

Die Erfindung betrifft ein Abbildungssystem, das einen eindimensional abtastenden, zeilenförmigen, photoempfindlichen Detektar aufweist.

Solche Abbildungssysteme sind unter dem Namen "Zeilenkamera" bekannt und werden vor allem für Kontrollaufgaben im Bereich der industriellen Fertigung eingesetzt. Sie enthalten ein eindimensionales Detektor-Array, auf das die Objekte mit Hilfe einer konventionellen Optik abgebildet werden. Eindimensianale Detektor-Arrays sind sehr viel preiswerter als zweidimensionale Matrizes und auch mit relativ hoher Anzahl von Einzelelementen auf einem Chip erhältlich. Zur Erzeugung eines zweidimensionalen Abbildes ist jedoch eine Relativbewegung zwischen Objektbild und Array erforderlich, die entweder durch mechanisch bewegte Spiegelsysteme im Abbildungsstrahlengang oder durch einen Antrieb des Objekts selbst bewerkstelligt wird. Diese Bewegungsabläufe begrenzen die erzielbaren Bildfolgefrequenzen nach oben hin und schränken diese Systeme hinsichtlich ihrer Verwendbarkeit ein. Zudem sind die nötigen Einrichtungen zum mechanischen Abtasten des Bildes in einer Koordinatenrichtung aufwendig und voluminös.

Aus der EP-A-0 021 093 ist ein Abtastgerät für zum Beispiel Strichcodes bekannt, welches eine spaltförmige Lichtquelle als scharf begrenztes spaltförmiges Lichtbündel auf ein Objekt projiziert und einen eindimensional abtastenden, photoelektrischen Detektor besitzt, der die reflektierte Intensitätsverteilung in Spaltrichtung auflöst und zur Mustererkennung verarbeitet. Das Gerät erzeugt jedoch einen feststehenden Lichtspalt und muß manuell relativ zum Objekt bewegt werden, wenn eine Zweidimensionale Auflösung des Bildes gewünscht wird. Das Gerät besitzt deshalb ebenfalls die bereits vorstehend genannten Nachteilen.

In "Optical Spectra", Mai 1980, Seite 51-52 ist ein Bildsensor beschrieben, der aus einem zweidimensionalen, sogenannten "CCD (Charge Coupled Device) Array" besteht, d.h., einer photoelektrischen Festkörpermatrix nach Art einer kapazitiven Eimerkettenschaltung, auf deren lichtempfindliche Schicht eine dünne, faseroptische Bildleiterplatte aufgelegt ist. Die Frontseite der Bildleiterplatte ist durch eine noch dünnere Glasplatte abgedeckt, in die seitlich Licht zur Beleuchtung des abzubildenden Objektes über Glasfasern eingekoppelt wird.

Der Sensor wird direkt auf den abzubildenden Gegenstand auf bzw. an diesen angelegt und liefert einen elektronischen "Kontaktabzug" des Gegenstandes.

Ein solcher Sensor, der ohne Linsenoptik auskommt, besitzt gewisse Vorteile gegenüber herkömmlichen Bildaufnahmesystemen, da er sehr klein ehalten werden kann und so beispielsweise nach Art eines Endoskops oder Technoskops zur Inspektion unzugänglicher Körperstellen oder Maschinenteile verwendet werden kann. Seine Nachteile bestehen einmal darin, daß zur Bildwandlung eine zweidimensionale Halbleitermatrix dient. Derartige Bauelemente besitzen jedenfalls zur Zeit noch eine geringe Auflösung und sind relativ teuer, da die Ausbeuten an fehlerfreien Exemplaren bei ihrer Herstellung ziemlich schlecht ist. Zum andern ist gerade bei medizinischer Anwendung das Heranführen von elektrischen Versorgungs- und Signalleitungen an das zu untersuchende Objekt problematisch.

Bekannte, fur die Endoskopie verwendete Bildsensoren bestehen daher aus einem faseroptischen Bildleiterbündel, über welches das distal mit Hilfe einer Optik auf der Stirnseite des Bündels erzeugte Bild des Objekts zu einer herkömmlichen Röhrenkamera übertragen wird.

Es ist die Aufgabe der vorliegenden Erfindung ein möglichst einfach aufgebautes und preiswertes Abbildungssystem zu schaffen, das ohne zweidimensionale Detektoren auskommt und keine Relativbewegung zwischen Objekt und Detektor erfordert.

Diese Aufgabe wird durch eine Ausbildung gemäß dem Hauptanspruch gelöst.

Bei dem erfindungsgemäßen Abbildungssystem wird das Objekt in einer Koordinate von einem spaltförmig begrenzten Lichtbündel abgetastet, das die Auflösung der Abbildung in dieser ersten Abtastrichtung festlegt. Die Auflösung in der zweiten Koordinatenrichtung liefert der Detektor, gegen den weder das Objekt selbt noch dessen Bild bewegt werden muß. Mechanische Abtaster zwischen dem Objekt und dem Detektor sind daher nicht vorzusehen. Auch auf der Beleuchtungsseite kann auf bewegte Teile verzichtet werden, denn als Lichtquelle können eindimensionale Leucht-oder Laserdiodenarrays eingesetzt werden.

Für die Ausbildung der beiden optischen System auf der Beleuchtungsseite und auf der Beobachtungsseite bieten sich zwei recht unterschiedliche, vorteilhafte Ausführungsformen an.

In der ersten Ausführungsform sind die beiden optischen Systeme unter Verwendung von Zylinderlinsen aufgebaut. Dabei bestehen die optischen Systeme zweckmäßig aus einem in sphärischer Optik aufgebauten Kondensor bzw. Objektiv und einer anamorphotischen Tubusoptik. Das hat den Vorteil, daß für den Kondensor bzw. das Objektiv herkömmliche, beispielsweise aus der Mikroskopie entliehene Baugruppen Verwendung finden können, die auch gegen solche mit geändertem Abbildungsmaßstab auswechselbar sind.

In der zweiten Ausführungsform sind die beiden optischen Systeme in Lichtleitertechnik aufgebaut, derart, daß die beiden optischen Systeme als dem Objekt unmittelbar benachbarte und dort einander überkreuzende, zeilen- bzw. spaltenförmige Anordnungen lichtleitender Kanäle ausgebildet sind, deren Lichtfürungseigenschaften im Kreuzungsbereich so modifiziert sind, daß ein Auskoppeln von Licht aus den Kanälen des ersten optischen Systems in Richtung des Objekts und ein Wiedereinkoppeln des vom Objekt gestreuten Lichts in die Kanäle des zweiten optischen Systems erfolgt.

Das so aufgebaute Abbildungssystem kann äußerst kompakt gehalten werden und ist in seinen Abmessungen kaum größer als die abzubildende Fläche. Für die Zu- bzw. Ableitung der optischen Bildsignale sind lediglich $m + n$ lichtleitende Kanäle erforderlich, bei einer Auflösung des Objektes in $m \cdot n$ Bildpunkte. Herkömmliche Bildleiter erfordern dagegen einer Anzahl von $n \cdot m$ Einzelfasern. Es ergibt sich also eine Reduktion des Querschnitts des zur Signalübertragung dienenden Faserbündels um den Faktor $\frac{n \cdot m}{n + m}$, also um mehr als das 100-fache, wenn man von gängigen Werten für die Auflösung des zu übertragenden Bildes in Größenordnungen von mehreren 100 Bildpunkten pro Koordinate ausgeht.

Es ist vorteilhaft den dem Objekt unmittelbar benachbarten Teil der beiden optischen Systeme, d.h. den eigentlichen Sensor, der auf das Objekt aufgelegt wird, aus zwei aneinander überkreuzenden Lagen von Glasfasern aufzubauen. Der Sensor und das zur Signalübertragung verwendete Faserbündel bestehen dann aus einem Stück, so daß Koppelprobleme zwischen Sensor und Signalleitung vermieden sind.

Zur Auskopplung bzw. wieder Einkopplung des Lichts in die Richtung senkrecht zur Faserlängsachse ist dann der Mantel der Faser im Kreuzungsbereich zwekmäßigerweise auf der dem Objekt gegenüberliegenden Seite entfernt, und auf die Faserkerne sind beispielsweise Beugungsgitter aufgebracht. Damit läßt sich ein hoher Wirkungsgrad für das Ein- bzw. Auskoppeln des Lichtes erzielen.

Es kann auch zweckmäßig sein die Faserkerne beispielsweise der zur Beleuchtung dienenden Teilstruktur in dem Bildaufnahmebereich, in dem die Fasern aneinander überkreuzen, mit streuendem Material zu dotieren. Dann tritt die dadurch erzeugte Streustrahlung im Objektbereich mit einer durch die Faserkenndaten bestimmten Winkelverteilung aus.

Alternativ zum Aufbau des Sensors aus Einzelfasern kann es zweckmäßig sein, wenn die lichtleitenden Kanäle ebenso wie die Elemente zur Ein-und Auskopplung wie z. B. Phasengitter, in Form von integrierter Optik auf ein Substrat aufgebracht sind. Diese Alternative bietet fertigungstechnische Vorteile bei der Herstellung miniaturisierter Bildsensoren, erfordert jedoch unter Umständen eine zusätzliche Kontaktierung des Sensors mit einem vorzugsweise flexiblen Lichtleiterbündel.

Zur Umsetzung der auf den lichtleitenden Kanälen der Empfängerstruktur liegenden Bildinformation in ein elektrisches (Video) Signal können handelsübliche eindimensionale Detektordioden-Arrays oder sogenannte "Charge Coupled Devices" (CCD-Arrays) verwendet werden, an deren einzelne Elemente die Kanäle angekoppelt sind. Auf der Beleuchtungsseite werden vorteilhaft Lumineszenz- oder Laserdioden-Arrays eingesetzt; hier kann es auch zweckmäßig sein mehrere Arrays mit verschiedener Emissionswellenlänge an die entsprechenden Lichtleiter anzukoppeln, um eine farbige Abbildung zu ermoglichen. Dabei existieren grundsätzlich die beiden Möglichkeiten

1. das von den Elementen der verschiedenen z. B. Lumineszenzdioden-Arrays ausgehende Licht vor dem eigentlichen Bildsensor jeweils in einer Faser bzw. einem Kanal zusammenzuführen, oder

2. im Bereich des Bildsensors beleuchtungsseitig mehrere parallele Unterstrukturen bzw. Fasergruppen für die gewünschten Spektralbereiche vorzusehen. Die Mischung der Farben erfolgt in diesem Fall in der Objektebene.

Anstelle eines "aktiven" Arrays, zur sequentiellen, spaltenförmigen Objektbeleuchtung kann auch ein "passives" Array aus elektrooptischen Steuerelementen verwendet werden, das die von einer gemeinsamen Lichtquelle versorgten Kanäle im Takte der Abtastfrequenz an die Lichtquelle aufschaltet.

Weitere vorteilhafte Ausgestaltungen der Erfindung werden nachstehend anhand der Figuren 1-9 der beigefügten Zeichnungen näher erläutert. Dabei zeigen:

Fig. 1 eine Skizze zur Verdeutlichung des der Erfindung zugrundeliegenden Abtastprinzips;

Fig. 2 eine Prinzipskizze eines ersten Ausführungsbeispiels in einer ersten Schnittebene;

Fig. 3 eine Prinzipskizze des Ausführungsbeispiels aus Fig. 1 in einer zweiten, dazu senkrechten Schnittebene;

Fig. 4 eine Prinzipskizze eines zweiten Ausführungsbeispiels im Grundriß;

Fig. 5 einen Schnitt längs der Linie II-II in Fig. 4;

Fig. 6 einen weiteren Schnitt längs der Linie III-III in Fig. 4;

Fig. 7 einen Schnitt durch ein drittes, leicht abgewandeltes Ausführungsbeispiel:

Fig. 8 ein viertes Ausführungsbeispiel in perspektivischer Explosionsdarstellung;

Fig. 9 eine perspektivische Prinzipskizze eines fünften Ausführungsbeispiels der Erfindung.

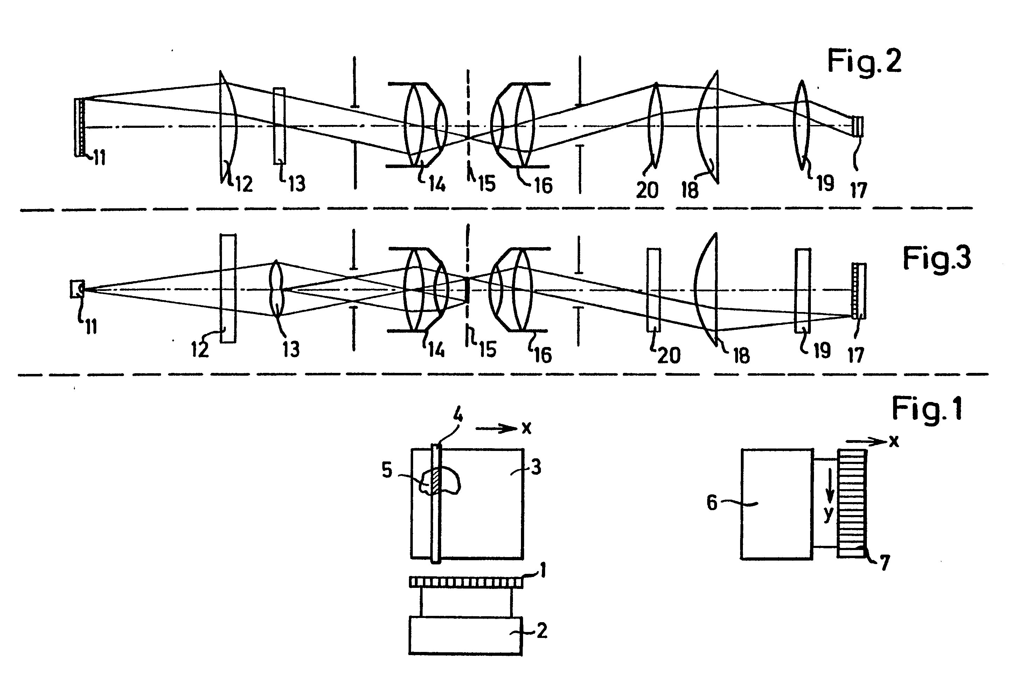

In Fig. 1 ist mit 1 ein Laserdiodenarray bezeichnet, dessen einzelne Elemente von einer Ansteuerelektronik 2 sequentiell erregt werden, so daß ein längs der mit x bezeichneten Richtung wandernder Lichtpunkt entsteht. Eine hier nicht näher dargestellte Optik verzerrt die lichtemittierenden Flächen des Diodenarrays 1 durch Expansion in y-Richtung zu spaltförmigen Leuchtflecken 4, mit denen das Objekt 5 in der Objektebene 3 abgetastet wird.

Die Objektebene 3 wird durch eine weitere Optik in x-Richtung gestaucht auf ein parallel zum Spalt 4 angeardnetes Detektorarary 7 abgebildet, welches die Abtastung des Objekts 5 in y-Richtung durchführt.

Die Frequenz der Abtastung durch das Laserdiodenarray 1 ist etwa um den sich aus der Anzahl seiner Einzelemente ergebenden Faktor niedriger als die Abtastfrequenz des Detektorarrays 7.

Ein erstes Ausführungsbeispiel für die beiden optischen Systeme zur Beleuchtung und zur Beobachtung der jetzt im Schnitt gezeigten Objektebene ist in den Fig. 2 und 3 skizziert, die Schnittzeichnungen in zwei zueinander senkrechten Ebenen darstellen.

Zur Abbildung des Laserdiodenarrays 11 in Längsrichtung x des Arrays 11 in die Objektebene 15 dienen ein Kondensor 14, der in sphärischer Optik aufgebaut ist, und die Zylinderlinse 12, deren Zylinderachse senkrecht zur Längsrichtung x des Arrays 11 steht (Fig. 2).

Die Aufweitung der lichtemittierenden Flächen des Arrays 11 in die dazu senkrechte Richtung y erfolgt durch eine Zylinderlinse 13, deren Zylinderachse senkrecht auf der Achse der Linse 12 steht und die die Elemente des Arrays 11 verzerrt in die hintere Brennebene des Kondensors 14 abbildet (Fig. 3).

Um den Einfluß der winkelabhängigen Leuchtdichteverteilung der Elemente des Arrays 11 auf die Homogenität der Ausleuchtung der Objektebene 15 in Streifenrichtung y zu verringern ist die Zylinderlinse 13 als Doppellinse ausgebildet.

Die Abbildung der Objektebene 15 auf das Detektorarray 17 erfolgt in Streifenrichtung durch ein rein sphärische Optik, bestehend aus dem Objektiv 16 und einer Tubuslinse 18 (Fig. 3). In der dazu senkrechten Richtung y ist der Durchmesser des von der Objektebene 13 ausgehenden Strahlbündels auf die Breite des Detektorarrays 17 zu stauchen. Dies geschieht durch eine Optik in Form zweier Zylinderlinsen 19, 20, die zusätzlich zu der sphärischen Tubuslinse 18 im Strahlengang zwischen dem Objektiv und dem Array 17 angeordnet sind und für die Abbildung in Streifenrichtung keine Wirkung besitzen.

Es ist keineswegs nötig, daß diese Stauchung in der Größenordnung der Anzahl der Elemente des Detektorarrays 17, d.h. im Verhältnis ca. 1000 : 1 durchgeführt wird. Denn es sind Detektorarrays erhältlich, deren Elemente bereits die Form eines Rechtecks mit einem Seitenverhältnis von 100 : 1 besitzen (Detektor der Fa. Retikon mit der Typen-Bezeichnung RL 1024 S). Bei Verwendung derartiger Arrays ist daher nur eine Stauchung des Strahlbündels durch die Zylinderoptik etwa um den Faktor 10 erforderlich.

Es kommt auch nicht auf eine scharfe und bildfehlerfreie Abbildung der beleuchteten Streifen in x-Richtung an, da die Auflösung des Bildes in dieser Koordinate ja durch die Beleuchtungsoptik erfolgt. In dem in Fig. 2 dargestellten Fall bilden die Linsen 18 - 20 die hintere Brennebene des Objektivs 16 auf den Detektor 17 ab.

Das in den Fig. 2 und 3 skizzierte Abbildungssystem für Durchlicht kann ohne weiteres für Auflichtbeleuchtung abgewandelt werden, in dem man hinter dem Objektiv 16, das dann die Funktion des Kondensors 14 mit übernimmt, einen Strahlteiler anordnet.

Es ist außerdem klar, daß Objektiv und Kondensor gegen solche mit anderem Abbildungsmaßstab ausgewechselt werden können.

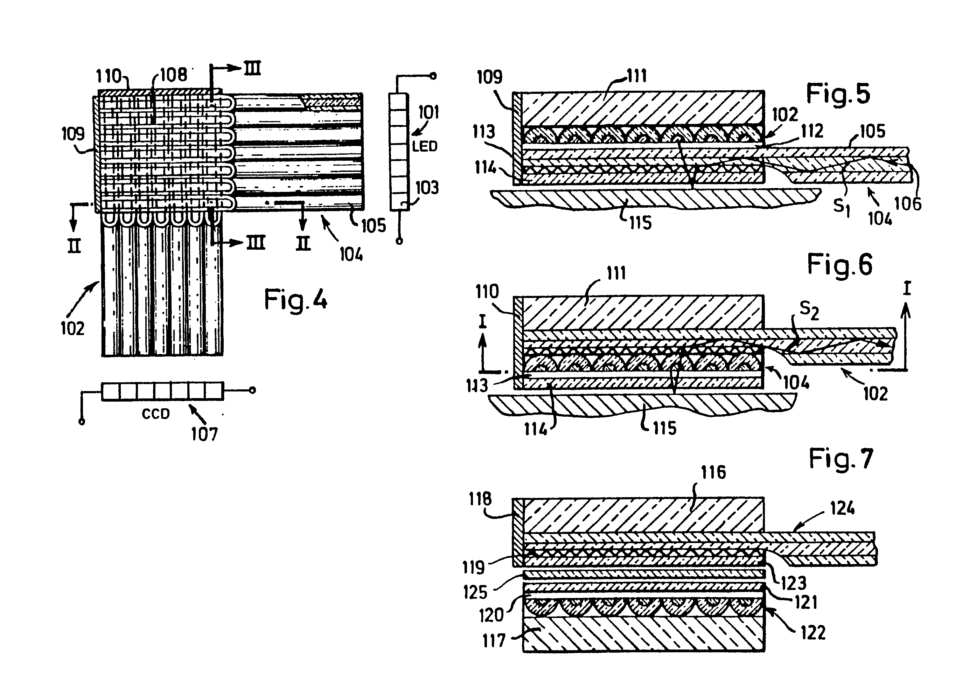

Das in den Figuren 4 - 6 dargestellte Abbildungssystem ist in Lichtleitertechnik aufgebaut und besteht aus zwei Lagen 104 und 102 nebeneinanderliegender Glasfasern, die auf einem Träger 111 befestigt sind und sich in dem mit 108 bezeichneten Bereich überkreuzen. Im Bereich 108 sind die Faserlagen 104 und 102 einseitig bis in den lichtleitenden Kern 106 der Fasern angeschliffen.

Die Faserlage 104 dient zur Führung des Beleuchtungslichts, das von einer Leuchtdiodenzeile 101 in die stirnseitigen Enden der Faserlage 104 eingekoppelt wird. Dabei ist jeder Faser eine Leuchtdiode zugeordnet, z. B. der Faser 105 die Leuchtdiode 103. Die der Leuchtdiodenzeile 101 entgegengesetzten Stirnseiten der Faserzeile 104 sind mit einer Spiegelschicht 109 versehen.

Zum Auskoppeln des Lichtes aus den Fasern der Lage 104 dient ein Beugungsgitter 113, das mit seinen Gitterlinien senkrecht zur Faserlängsachse direkt auf die freiliegenden Kerne der Fasern der Lage 104 aufgelegt ist (Fig. 5). Die Gitterkonstante des Gitters 113 ist so gewählt, daß abhängig von der Winkelverteilung der im Kern der Fasern geführten Lichtstrahlen eine möglichst effektive Auskopplung des Lichts in Richtung auf das unter dem Gitter 113 befindliche Objekt 115 erfolgt.

Das abzubildende Objekt 115, auf das der Sensor mit der ihn nach unten abschließenden, zum Schutz des Gitters 113 dienenden Glasplatte 114 direkt aufgelegt ist, wird also von einem spaltförmigen Lichtbündel beleuchtet, dessen Breite etwa dem Durchmesser eines Faserkerns 106 entspricht. Bei sequentieller Erregung der Einzelelemente der LED-Zeile 101 durch eine entsprechende, handelsübliche Ansteuerelektronik mit einer Frequenz fl werden aufeinanderfolgende Fasern der Lage 104 beleuchtet, so daß der auf das Objekt auftreffende Lichtspalt senkrecht zu seiner Längsrichtung über das Objekt 115 wandert.

Das vom Objekt 115 reflektierte bzw. zurückgestreute Licht durchsetzt die transparente Platte 114 sowie das Gitter 113 und die Faserlage 104 und gelangt damit in den "Empfangsteil" des Sensors. Dieser Teil ist in gleicher Weise wie der "Sendeteil" des Sensors aufgebaut und besteht aus einem Beugungsgitter 112 und der darüber angeordneten Faserlage 102. Das Ein- und Auskoppeln von Licht in einen optischen Wellenleiter mit Hilfe von Beugungsgittern ist im übrigen an sich bekannt und z. B. in den DE-PS'sen 2 142 263, 2 552 118 und der DE-OS2 751 103 beschrieben. Der Verlauf eines Strahlenbündels $S_1$ und $S_2$ von der Faserlage 104 zum Objekt und zurück in die Faserlage 102 ist in den Figuren 4 und 5 beispielhaft dargestellt.

Das in den Fasern der Lage 102 vom Sensor fortgeleitete Licht gelangt zu einem eindimensionalen, sogenannten CCD (Charge coupled device) Array 107, der ein den Intensitäten der auf seine Einzelelemente auffallenden Lichtes proportionales elektrisches Signal abgibt. Die Abtastung des Arrays 107 erfolgt mit einer im Vergleich zu Frequenz $f_1$ der LED-Zeile 101 höheren Frequenz $f_2$, die mindestens die Größe $f_2 = n \cdot f_1$ besitzt, wenn n die Anzahl der Elemente des CCD-Arrays 107 ist.

Am Ausgang der nicht dargestellten Treiberelektronik des Arrays 107 läßt sich ein Video-Signal abnehmen, das die Bildinformation über die von dem Sensor im Bereich der überkreuzenden Fasern abgedeckten Oberfläche des Objekts 115 enthält. Bei Anpassung der Abtastfrequenz $f_1$ und $f_2$ an die heute üblichen Namen der Fernsehbilddarstellung kann dies Signal direkt einem gängigen Monitor zugeführt werden, auf dem dann ein Grauwertbild des Objekts 115 entsteht.

In Fig. 7 ist eine für Durchlichtobjekte leicht abgewandelte Ausführungsform des vorstehend beschriebenen Abbildungssystems dargestellt. Die Darstellung ist auf den Schnitt in der Ebene beschränkt, in der auch die Fig. 6 gezeichnet ist.

Der Durchlicht-Sensor ist zweiteilig aufgebaut. Der obere Teil besteht aus einem Träger 116, auf das die Licht zuführende Faserlage 124 aufgebracht ist. Auf die im Bereich des Sensors angeschliffenen Faserkerne ist wieder ein Gitter 119 zur Auskopplung des Lichts aufgebracht. Darunter befindet sich eine schützende Glasplatte 125. Frontseitig sind die Enden der Fasern mit einer Spiegelschicht 118 abgedeckt.

Der untere, lichtaufnehmende Teil des Sensors ist abgesehen von der unterschiedlichen Gitterkonstante des dort auf die Faserlage 122 aufgebrachten Beugungsgitters 120 genauso aufgebaut wie der obere, beleuchtende Teil des Sensors; allerdings ist der untere Teil um einen Winkel von 90° gegen den oberen Teil des Sensors verdreht. Zwischen beiden Teilen befindet sich das dünne Durchlichtabjekt 125, beispielsweise ein Mikrofilm. An die Enden der Faserlagen 121 und 122 sind wieder jeweils eine LED-Zeile und ein CCD-Array angekoppelt; die Bilderzeugung läuft auf die gleiche, für die vorgenannten Ausführungsbeispiele beschriebenen Weise ab.

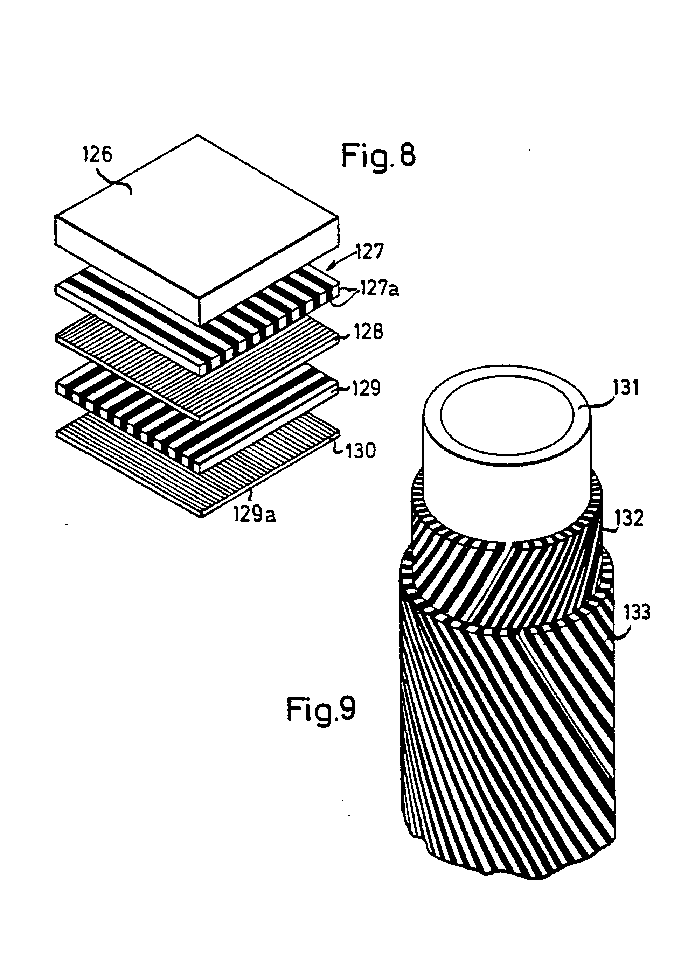

Anstelle von diskreten Einzelfasern können für die lichtleitenden Kanäle des Sensors auch in Form von integrierter Optik hergestellte Bauelemente verwendet sein. Wie die Fig. 8 zeigt besteht der dort dargestellte Sensor aus einem Substrat 126 mit niedriger Brechzahl, auf das eine transparente Schicht 127 aus höherbrechendem Material aufgebracht ist. In der Schicht 127 sind, beispielsweise nach dem in Applied Optics, Vol.

17, No. 4, (1978), S. 646-650 beschriebenen Verfahren mehrere, parallellaufende Kanäle 127a mit geändertem, höheren Berechungsindex eingearbeitet. Diese Kanäle 127a entsprechenden den Kernen 106 der Foserlage 104 des Sensors nach Fig. 4 - 6 und dienen zur Führung des Lichtes über die vom Sensor abgedeckte Fläche.

Auf die Schicht 127 folgt zur Auskopplung des Lichtes ein Beugungsgitter 128, beispielsweise ein holographisch erzeugtes Transmissionsphasengitter. Daran schließt sich eine weitere Schicht 129 an, die den gleichen Aufbau wie die Schicht 127 besitzt, jedoch wieder um 90° gegenüber der Schicht 127 gedreht ist. Ein zweites Gitter 130 bildet das dem Objekt gegenüberliegende, letzte Bauelement des Sensors.

Die Schichten 127 und 129 können aus einem elastischen Polymer bestehen und aus dem Bereich des Sensors herausverlängert direkt als als verbindende Lichtleiter zwischen dem Sensor und den anzuschließenden CCD-Array und der LED-Zeile dienen.

Der in Fig. 9 dargestellte Sensor besitzt eine zylindrische Bauform. Auf den inneren, rohrförmigen Träger 131 sind die bereits in Fig. 8 beschriebenen Schichten gegensinnig verdrillt aufgebracht. Der Einfachheit halber sind nur die lichtleitenden Schichten 132 und 133 dargestellt und die zur Aus- bzw. Einkopplung verwendeten Gitter weggelassen.

Dieser Sensor eignet sich besonders für die Endoskopie, da mit ihm die Oberfläche eines elastischen anliegenden Körperkanals vollumfänglich, d.h. mit einem Bildwinkel von 360°, abgebildet werden kann. Das Innere des hohlen Trägers 131 steht vollständig für die Durchführung von mikrochirurgischen Instrumenten und zur Aufnahme von Kanälen für die Spülung zur Verfügung.

## Patentansprüche

1. Abbildungssystem mit einem ersten optischen System (12-14; 104; 124), das eine Lichtquelle (1; 11; 101) als scharf begrenzten Spalt auf ein Objekt (5; 15; 115; 125) projiziert, und einem zweiten optischen System (18-20; 102; 122), von dem das Objekt auf einen eindimensional abtastenden, zeilenförmigen Detektor (7; 17; 107) abgebildet wird, dadurch gekennzeichnet, daß die Lichtquelle mehrere einzeln erregbare punktförmige Elemente (103) umfaßt, die durch das erste optische System in nebeneinanderliegende Spalte umformbar sind derart, daß bei sequentieller Erregung der Einzelelemente in der Objektebene (3) ein senkrecht zur Koordinatenrichtung (Y) des Detektors fortschreitendes, spaltförmiges Lichtbündel (4) entsteht.

2. Abbildungsystem nach Anspruch 1, dadurch gekennzeichnet, daß die beiden optischen Systeme unter Verwendung von Zylinderlinsen (12, 13; 19, 20) aufgebaut sind.

3. Abbildungssystem nach Anspruch 2, dadurch gekennzeichnet, daß die beiden optischen Systeme jeweils aus einem aus sphärischer Optik aufgebauten Objektiv (14) bzw. Kondensor (16) und einer anamorphotischen Tubusoptik (12, 13; 19, 20) bestehen.

4. Abbildungssystem nach Anspruch 1, dadurch gekennzeichnet, daß die beiden optischen Systeme als dem Objekt unmittelbar benachbarte und dort einander überkreuzende, zeilen- bzw. spaltenförmige Anordnungen (102, 104; 122, 124, 127, 129; 132, 133) lichtleitender Kanäle ausgebildet sind, deren Lichtführungseigenschaften im Kreuzungsbereich so modifiziert sind, daß ein Auskoppeln von Licht aus den Kanälen des ersten optischen Systems in Richtung des Objekts und ein Wiedereinkoppeln des vom Objekt gestreuten Lichts in die Kanäle des zweiten optischen Systems erfolgt.

5. Abbildungssystem nach Anspruch 4, dadurch gekennzeichnet, daß die lichtleitenden Kanäle 127, 129) sowie Elemente (128, 130) zur Ein- bzw. Auskopplung von Licht in Form von integrierter Optik auf ein Substrat aufgebracht sind.

6. Abbildungssystem nach Anspruch 4, dadurch gekennzeichnet, daß die lichtleitenden Kanäle (102, 104; 122, 124) der beiden optischen Systeme jeweils durch eine Lage nebeneinanderliegender Glasfasern (105) gebildet sind.

7. Abbildungssystem noch Anspruch 6, dadurch gekennzeichnet, daß der Mantel der Fasern (105) in Kreuzungsbereich zumindest teilweise entfernt ist.

8. Abbildungssystem nach Anspruch 4-7, dadurch gekennzeichnet, daß zum Ein- bzw. Auskoppeln van Licht auf die lichtleitenden Kanäle im Kreuzungsbereich Beugungsgitter (112, 113; 119, 120; 128, 130) aufgebracht sind.

9. Abbildungssystem nach Anspruch 4-6, dadurch gekennzeichnet, daß die Kanäle mindestens einer der beiden optischen Systeme streuendes Material enthalten.

10. Abbildungssystem nach Anspruch 4-9, dadurch gekennzeichnet, daß die beiden Anordnungen (102, 104) lichtleitender Kanäle direkt aufeinander aufliegen.

11. Abbildungssystem nach Anspruch 1-10, dadurch gekennzeichnet, daß als Lichtquelle ein Leucht- oder Laserdioden-Array (1, 101) dient und zum Nachweis des Lichts ein Detektordioden-Array oder ladungsgekoppeltes Detektor-Array (7, 107) verwendet ist.

12. Abbildungssystem nach Anspruch 4 und 11, dadurch gekennzeichnet, daß die Einzelelemente der Arrays mit den Kanälen (106) der beiden optischen Systeme über flexible Lichtleiter verbunden sind.

**Claims**

1. An imaging system having a first optical system (12-14; 104 124) for projecting a light source (1; 11; 101) into a sharply defined columar beam at an object (5; 15; 115; 125), and having a second optical system (18-20; 102; 122) for imaging the object onto a linear scanning detector (7; 17; 107); characterized by the fact that the light source comprises a pluraly of single punctiform light elements (103) which are transformed by the first optical system into adjacent columns in such a way that a columnar light beam travelling perpendicular to the coordinate direction (Y) of the detector is generated in the object plane when energizing the single light elements in a sequence.

2. The imaging system of claim 1, characterized by the fact that both optical systems comprise cylinder lenses (12, 13; 19, 20).

3. The imaging system of claim 2, characterized by the fact that both optical systems consist of an objective (14) or a condensor (16) made by spherical optics and anamorphotic tube optic means (12, 13; 19, 20).

4. The imaging system of claim 1, characterized by the fact that both optical systems include a plurality of light-conductive, line-like channels (102 , 104; 122, 124; 127, 129; 132; 133) placeable directly adjacent the object and overlapping there in crosswise fashion, the light conducting properties of said channel being modified that light from the channels of said first optical system is decoupled out of these channels onto the object, and light scattered from the object is coupled back into the channels of the second optical system.

5. The imaging system of claim 4, characterized by the fact that the light conducting channels (127, 129) and the elements (128, 130) for decoupling and coupling back light each being configured as an integrated optical unit formed on a substrate.

6. The imaging system of claim 4, characterized by the fact that the channels (102, 104 ; 122, 124) of both optical systems are made by respective layers of mutually adjacent glass fibers (105).

7. The imaging system of claim 6, characterized by the fact that the cladding of said optic fibers (105) is removed at least partly in the region where said fibers overlap.

8. The imaging system of claims 4-7, characterized by the fact that diffraction gratings (112, 113; 119, 120; 128, 130) for coupling the light in or out of said optic fibers are put on the light conducting channels in the region of overlap.

9. The imaging system of claims 4-6, characterized by the fac that the channels of at least one of both optical systems contain light scattering material.

10. The imaging system of claims 4-9, characterized by the fact that both sets (102, 104) of light conducting channels are in direct contact with each other.

11. The imaging system of claims 1-10, characterized by the fact that the light source is an array of luminescent diodes or laser diodes (1, 101) and the detector for detecting the light is an array of detector diodes or an array of charge- coupled detectors (7, 107).

12. The imaging system of claim 4 and 11, characterized by the fact that the elements of said arrays are optically connected to the channels (106) of both optical systems via respective sets of flexible light conductors.

## Revendications

1. Système de formation d'image comprenant un premier système optique (12-14; 104; 124) qui projette une source lumineuse (1; 11; 101) comme une fente nettement délimitée sur un objet (5; 15; 115; 125) et un second système optique (18-20; 102; 122) par lequel l'objet est représenté sur un détecteur (7; 17; 107) explorateur ou de balayage unidimensionnel, qui est en forme de ligne, caractérisé en ce que la source lumineuse comporte plusieurs éléments ponctuels (103), susceptibles d'être excités individuellement, qui sont transformables par le premier système optique en fentes juxtaposées, de telle manière que lors d'une excitation séquentielle des éléments, un faisceau lumineux (4) en forme de fente, qui progresse perpendiculairement à la direction de coordonnée (Y) du détecteur, est formé dans le plan objet (3).

2. Système selon la revendication 1, caractérisé en ce que les deux systèmes optiques sont réalisés avec utilisation de lentilles cylindriques (12, 13; 19, 20).

3 Système selon la revendication 2, caractérisé en ce que les deux systèmes optiques sont composés chacun d'un objectif (14) ou d'un condenseur (16), constitué d'une optique sphérique, et d'une optique à tube anamorphosique (12, 13; 19, 20).

4. Système selon la revendication 1, caractérisé en ce que les deux systèmes optiques sont réalisés comme des dispositions (102, 104; 122, 124, 127, 129; 132, 133) de canaux conducteurs de lumiere, dispositions qui sont en forme de lignes ou de colonnes et sont directement adjacentes à l'objet, où elles se croisent, dont les caractéristiques de guidage de la lumière dans la zone de croisement sont modifiées de manière que la lumière soit extraite des canaux du premier système optique en direction de l'objet et que la lumière diffusée par l'objet soit réinjectée dans les canaux du second système optique.

5. Système selon la revendication 4, caractérisé en ce que les canaux conducteurs de lumière (127, 129) ainsi que des éléments (128, 130) pour l'injection et la sortie de la lumière sont disposés sous forme d'un dispositif optique integré sur un substrat.

6. Système selon la revendication 4, caractérisé en ce que les canaux conducteurs de lumière (102, 104; 122, 124) des deux systèmes optiques sont formés chaque fois par une couche de fibres de verre (105) juxtaposées.

7. Système selon la revendication 6, caractérisé en ce que le revêtement des fibres (105) est au moins partiellement enleve dans la zone de croisement.

8. Système selon les revendications 4-7, caractérisé en ce que des réseaux de diffraction (112, 113; 119, 120; 128, 130) sont appliqués dans la zone de croisement sur les canaux conducteurs de lumière en vue de réinjection et de la sortie de la lumière.

9. Système selon les revendications 4-6, caractérisé en ce que les canaux d'au moins l'un de deux systèmes optiques contiennent du matériau dispersif.

10. Système selon les revendications 4-9, caractérisé en ce que les deux dispositions (102, 104) de canaux conducteurs de lumière sont posées directement l'une sur l'autre.

11. Système selon les revendications 1-10, caractérisé en ce qu'un dispositif à diodes électroluminescentes ou à diodes lasers (1, 101) sert de source lumineuse et qu'un dispositif détecteur formé de diodes ou un dispositif détecteur à transfert de charge (7, 107) est employé pour détecter la lumière.

12. Système selon les revendications 4 et 11, caractérisé en ce que les différents éléments des dispositions comportant les canaux (106) des deux systèmes optiques sont reliés entre eux par des conducteurs de lumière flexibles.

Fig.2

11 12 13 14 15 16 20 18 19 17

Fig.3

11 12 13 14 15 16 20 18 19 17

Fig.1

4
x
5
3
6
x
y
1
7
2

0 115 267

Fig.4

Fig.5

Fig.6

Fig.7

0 115 267

Fig. 8

126

127
127a
128
129
130

129a

Fig. 9

131

132

133